# EUROPEAN PATENT APPLICATION

(11) **EP 3 072 584 A1**
(43) Date of publication of application: **28.09.2016**
(21) Application number: 15160750.4
(22) Date of filing: 25.03.2015
(51) Int. Cl.: B01J 20/26

(54) **METHOD FOR THE PRODUCTION OF MOLECULARLY IMPRINTED PARTICLES COMPRISING A CORE AND A COATING**

(71) Applicant: Universität Ulm, 89081 Ulm (DE)
(72) Inventor: The designation of the inventor has not yet been filed
(74) Representative: Pfenning, Meinig & Partner mbB

(57) **Abstract**

The present invention relates to a method for the production of molecularly imprinted particles comprising a core and a coating, the core comprising or consisting of a solid or semi-solid matrix material, and the coating comprising or consisting of a molecularly imprinted polymer (MIP). Furthermore, the present invention relates to a molecularly imprinted particle that may be obtained by this method. Such molecularly imprinted particle can be used in a method of recognizing or immobilizing target biomacromolecules or substructures thereof.

## Description

The present invention relates to a method for the production of molecularly imprinted particles comprising a core and a coating, the core comprising or consisting of a solid or semi-solid matrix material, and the coating comprising or consisting of a molecularly imprinted polymer (MIP). Furthermore, the present invention relates to a molecularly imprinted particle that may be obtained by this method. Such molecularly imprinted particle can be used in a method of recognizing or immobilizing target biomacromolecules or substructures thereof.

Molecular imprinting is a technique, which allows the creation of artificial recognition sites in synthetic polymer particles using template molecules. The resulting recognition sites are complimentary to template molecules in size, shape and the orientation of the functional groups. Commonly, this technique has demonstrated great potential when targeting small molecules of molecular weight <1500, while extending the technique to biological macromolecules such as proteins, has been difficult. The major problem associated with the imprinting of large structures like proteins lies in the restricted mobility of them within highly cross-linked polymer networks and poor efficiency in rebinding. Considering the mass transfer difficulty, a variety of approaches have been developed and among these surface imprinting is the most promising one. In surface imprinting approach, since the recognition sites are situated at or close the surface of molecularly imprinted polymers, mass transfer is improved and permanent entrapment of template protein is reduced.

Various studies have been performed for the surface imprinting of proteins. For example, Piletsky et al. (2001, Biosensors and Bioelectronics 16, 701-707) adopted a technique for coating polystyrene mircoplate wells with poly(3-aminophenylboronic acid) (poly-APBA) based-molecularly imprinted polymers (MIPs) specific for low-molecular weight analytes (epinephrine and atrazine) and proteins (horseradish peroxidise, glucose oxidase). Bossi et al. (2001, Anal. Chem. 73, 5281-5286) also coated polystyrene microplate wells with poly-APBA in the presence of template proteins microperoxidase, horseradish peroxidise, lactoperoxidase, and haemoglobin. This process resulted in the grafting of a thin MIP layer to the polystyrene surface of the microplates. Rick (2005, Analytica Chimica Acta 542, 26-31) prepared poly-APBA-based lysozyme and cytochrome c imprinted polymers on the gold surfaces of quartz crystal microbalance (QCM) electrodes. Recently, Lu et al. (2009, App.Surface Science 255, 6061-6066; 2009, App.Surface Science 256, 1341-1346) and Yan et al. (2007, Journal of polymer Science: part A: Polymer Chemistry 45, 1911-1919; 2009, Front. Chem. China 4(2), 168-172) reported protein imprinted cor-shell type MIP microbeads prepared by grafting of poly-APBA onto the surface of polystyrene microbeads. Tatemichi et al. (2007, J. Am. Chem. Soc. 129, 10906-10910) prepared protein-imprinted organic-inorganic hybrid materials toward an acidic protein, pepsin, using titanium oxide and poly-L-lysine via liquid-phase deposition technique (LPD). In this study, organic/inorganic hybrid pepsin imprinted thin films have been synthesized an pepsin binding properties of thin films were investigated by using surface plasmon resonance spectroscopy. This technique requires special instrument, i.e. a surface plasmon resonance device, for the detection of pepsin binding. Furthermore, pepsin is imprinted onto the surface of thin organic/inorganic films without a structure-directing molecule, which results in low pepsin binding capacity.

Based on this prior art, it is the object of the present invention to provide molecularly imprinted particles with an increased binding capacity for at least one specific target biomacromolecule or substructures thereof and to provide a method for the production of such molecularly imprinted particles.

This object is achieved by the method according to claim 1 and the molecularly imprinted particle according to claim 15. Claim 19 is directed to a method of recognizing or immobilizing at least one target biomacromolecule or substructures thereof using a plurality of molecularly imprinted particle according to the invention. Further advantageous embodiments are contained in the dependent claims.

According to the invention, a method for the production of molecularly imprinted particles comprising a core and a coating is provided, wherein the core comprises or consists of a solid or semi-solid matrix material, and the coating comprises or consists of a molecularly imprinted polymer (MIP). The method according to the invention has the following steps:
a) dispersing of a plurality of cores in a dispersing medium, resulting in a dispersion of the cores,
b) addition of at least one structure-directing molecule to the dispersion of cores, each structure-directing molecule having affinity for at least one target biomacromolecule or a substructure thereof, and binding of the structure-directing molecule to the core surfaces, resulting in a dispersion of structure-directing-molecule-modified cores,
c) addition of at least one target biomacromolecule or a substructure thereof to the dispersion of structure-directing-molecule-modified cores, and formation of a complex between the at least one structure-directing molecule bound to the core surfaces and the at least one target biomacromolecule or a substructure thereof,
d) addition of at least one functional monomer, capable of being polymerized in the dispersion medium to the dispersion of structure-directing-molecule-modified cores,
e) polymerizing the functional monomer, resulting in a coating disposed on the surface of each of the cores, the coating comprising or consisting of a molecularly imprinted polymer (MIP), wherein the imprints of the MIP are filled with the target biomacromolecules or a substructure thereof, and
f) removing the at least one target biomacromolecule or a substructure thereof from the imprints of the MIP,
Steps c) and d) can be carried out in reverse order or simultaneously.

The cores used in step a) comprise or consist of a solid or semi-solid matrix material. This material can be a solid or semi-solid matrix material of any kind, e.g. an organic material, inorganic material or a hybrid material of an organic or inorganic material.

The cores used in step a) can be hollow and/or porous. The surface of such a hollow and/or porous core has an outer part that is arranged on the outside of the hollow and/or porous core and has an inner part that is arranged in the inside of the hollow and/or porous core. The pores of a porous core used in step a) can be of any possible form, e.g. in form of a cavity of any shape or in form of a channel. The surface of a pore of a porous core belongs to the inner part of the surface of the core. Hollow and/or porous cores used in step a) have holes that connect the inside of the core with the outside. Thus, the at least one functional monomer added in step d) can get to the inside of the hollow and/or porous cores and, therefore, it is possible that the inner part of the surface of the hollow and/or porous core is coated with the molecularly imprinted polymer (MIP) in step e).

Accordingly, it is possible that the inner part and the outer part of the surface of the hollow and/or porous core is coated with the molecularly imprinted polymer (MIP) in step e).

Alternatively, it is also possible that only the inner part of the surface of the hollow and/or porous core is coated with the molecularly imprinted polymer (MIP) in step e) or that only the outer part of the surface of the hollow and/or porous core is coated with the molecularly imprinted polymer (MIP) in step e).

It is also possible that the cores in step a) are neither hollow nor porous.

The molecularly imprinted particles obtained by the method according the present invention can have any possible shape. However, the particles are preferably virtually spherical, elliptical or rectangular.

The molecularly imprinted particle obtained by the method according the present invention can be a molecularly imprinted solid support bead, preferably a molecularly imprinted solid support bead of the core-shell type.

By using the method according to the present invention, molecularly imprinted particles comprising a core and a coating can be produced that have an increased binding capacity for at least one target biomacromolecule or a substructure thereof. This is achieved by immobilizing a structure-directing molecule having affinity for the at least one target biomacromolecule or a substructure thereof onto the surface of the cores. The immobilized structure-direction molecules are used as an architectural element for organizing the template molecule, i.e. the target biomacromolecule or a substructure thereof, at the surface of the cores, thus facilitating the imprinting procedure. The immobilization can be performed by using a very simple procedure and inexpensive chemicals.

A further advantage of the present invention is that simple UV-Vis spectrophotometry is sufficient to determine binding of the at least one target biomacromolecule or a substructure thereof to the surface. Furthermore, no cross-linker is needed during the imprinting process.

Moreover, due to the coating comprising or consisting of the MIP disposed on an outer surface and/or an inner surface of the core, it is obtained a very high number of binding sites for the at least one biomacromolecule or a substructure thereof and a large binding area providing a thin coating imprinted with the at least one target biomacromolecule or a substructure thereof, which facilitates fast mass transfer of the at least one target biomacromolecule or a substructure thereof.

A main feature of the present invention is to combine the advantages of thin film imprinting and the use of cores. Molecularly imprinted polymers synthesized in the form of thin films or bulk materials lack in effective binding area and rapid mass transfer, i.e. fast diffusion of proteins from/to the binding sites. Instead, coating of imprinted thin films onto the inner and/or outer surface of cores provides sufficient binding area. Furthermore, it is possible to obtain fast mass transfer kinetics and a high number of binding sites for the at least one target biomacromolecule or a substructure thereof using molecularly imprinted particles synthesized as disclosed in this invention using a structure-directing molecule having affinity for the at least one target biomacromolecule or a substructure thereof during the imprinting procedure.

Another important feature of the present invention is the immobilization of the structure-directing molecule onto the surface of the cores. By immobilizing, it is possible to control the structure of the imprinted film at the surface and to increase the specific binding capacity of the molecularly imprinted particles for the at least one target molecule.

The molecularly imprinted particles produced by the method according to the present invention can be used as a synthetic scavenger material for the selective removal of the at least one target biomacromolecule or a substructure thereof from biological media such as biotechnological solutions, cell lysates, etc. Alternatively, they can also be used a solid phase extraction/enrichment material, as chromatographic stationary phase material or as sensor material.

In a preferred embodiment of the method according to the present invention, the structure-directing molecule is selected from the group consisting of inhibitors for proteases, especially a protein, and the target biomacromolecules are selected from proteins, especially proteases, which can be inhibited by the inhibitors. Using a protein, such as a protease, as target biomacromolecule and using an inhibitor for this protein results in a strongly increased binding capacity of the molecularly imprinted particles since the protein and the inhibitor bind very strongly via enzyme-inhibitor interaction.

In a further preferred embodiment, the substructure of the at least one target biomacromolecule is an epitope of the at least one target biomacromolecule.

Furthermore, it is preferred that the structure-directing molecule is pepstatin and the target biomacromolecule is selected from aspartyl proteases, especially pepsin, cathepsin D, renin and mixtures thereof. A combination of using pepstatin as the structure-directing molecule and using pepsin as the target biomacromolecule is especially preferred.

A further preferred embodiment is characterized in that the structure-directing molecule is covalently or non-covalently bound to the core-surfaces.

In a further preferred embodiment, before binding the structure-directing molecule, the core-surfaces are amino-modified and the structure-directing molecule is covalently bound to the amino-groups of the core-surfaces.

Furthermore, it is preferred that the structure-directing molecule is a protein and bound via its carboxyl-terminus to the amino-groups of the core-surfaces forming an amide bond.

A further preferred in embodiment of the method according to the present invention is characterized in that the solid matrix material of the cores is selected from the group consisting of polymers, especially polystyrene and poly(meth)acrylates, glass, silica, ceramics, hydrogels and mixtures thereof.

The cores used in the present invention can have any possible shape. However, in a further preferred embodiment, the cores are virtually spherical, elliptical or rectangular and/or have an average diameter in between 10 mm and 1 nm, preferably in between 100 µm and 50 nm.

A further preferred embodiment of the method according to the present invention is characterized in that the cores are hollow and/or porous. Hollow and/or porous cores have an inner surface that can be coated with the molecularly imprinted polymer (MIP). The pore size of the porous cores is preferably in the range from 0.1 nm to 10 µm.

Furthermore, it is preferred that the functional monomer is 3-aminophenylboronic acid. Using 3-Aminophenylboronic acid is advantageous since it is a water-soluble monomer and it can be polymerized at roomtemperature.

A further preferred in embodiment is characterized in that the functional monomer is added as aqueous or organic solution.

Furthermore, it is preferred that the polymerization of the at least one functional monomer is effected by addition of at least one oxidant, especially ammonium persulfate.

In a further preferred embodiment of the method according to the present invention, the dispersion medium is selected from the group consisting of water, organic solvents and mixtures thereof. Such mixtures include any possible mixtures of any number of various organic solvents with or without water.

Furthermore, it is preferred that the removal of the at least one target biomacromolecule or a substructure thereof is effected by washing, denaturation of the target biomacromolecule or a substructure thereof, especially chemical and/or thermal denaturation, and/or extraction.

The present invention is also directed to a molecularly imprinted particle, comprising
a core, comprising or consisting of a solid or semi-solid matrix material,
at least one structure-directing molecule bound to the surface of the cores, each structure-directing molecule having affinity for at least one target biomacromolecule or a substructure thereof,
a coating disposed on an outer surface and/or an inner surface the core, wherein the coating is made of a polymerisate which is molecularly imprinted, the imprints corresponding to the at least one biomacromolecule or a substructure thereof.

The molecularly imprinted particle according to the present invention may have any possible shape. However, in a preferred embodiment, the particle is virtually spherical, elliptical or rectangular and/or a plurality of the particles has an average diameter in 10 mm and 1 nm, preferably in between 100 µm and 50 nm.

A further preferred embodiment is characterized in that the coating has a thickness in between 1 mm and 1 nm, preferably in between 1µm and 10 nm.

Furthermore, it is preferred that the molecularly imprinted particle according to the invention is produced according to a method according to the invention.

In a further preferred embodiment, the molecularly imprinted particle is a molecularly imprinted solid support bead, preferably a molecularly imprinted solid support bead of the core-shell type.

The present invention is also directed to a method of recognizing or immobilizing at least one target biomacromolecule or a substructure thereof by contacting a plurality of molecularly imprinted particles according to the invention with a medium containing the at least one target biomacromolecule or a substructure thereof. According to this method, target biomacromolecules such as proteins or substructures thereof can be easily and selectively removed from biological media such as biotechnological solutions and cell lysates. Even trace amounts of the imprinted protein may be bound, which is impossible with other techniques such as chromatographic techniques for clean up, etc. Hence, the molecularly imprinted particle according to the present invention may be packaged into clean-up columns for bioprocessing.

In addition, if pepstatin is used as the structure-directing molecule, such pepstatin immobilized particles can be used for the removal of pepsin, cathepsin D and renin proteases since pepstatin is a specific inhibitor for acidic proteases such as pepsin, cathepsin D and renin. Quantification of cathepsin D especially is very important as it is a specific biomarker for some diseases such as cancer. Using monoclonal antibodies, it has been shown that the procathepsin D level increases in plasma of patients with metastatic breast carcinoma. However, it remains difficult to determine the diagnostic value of procathepsin D due to a lack of standardized procedures in the determination of its concentration. Thus, with the present invention procathepsin D may become traceable in any medium even at very low concentrations, via selective removal or isolation using e.g. immobilized pepstatin or inhibitor-assisted imprinting for further quantification.

The present invention is explained in more detail with reference to the subsequent Examples and Figures without restricting the invention to the specific parameters shown there.
Fig. 1 shows a synthesis scheme for the immobilization of pepstatin on the surface of APS particles.
Fig. 2 shows a schematic illustration of pepsin surface imprinting technique.

### Example

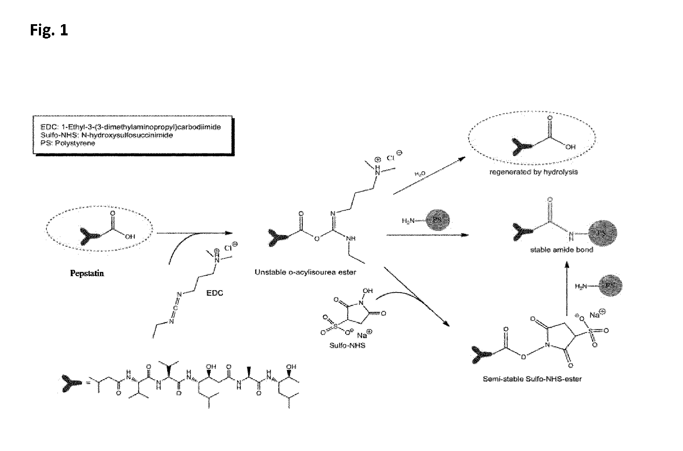

A core-shell synthetic protein scavenger material was developed for the selective removal of pepsin from biological media using inhibitor-assisted molecularly imprinted polymers. For inhibitor-assisted molecular imprinting of proteins - here, of pepsin - pepstatin (an inhibitor of pepsin) was immobilized onto the surface of amino polystyrene (APS) particles via a carbodiimide linker reaction (Fig. 1).

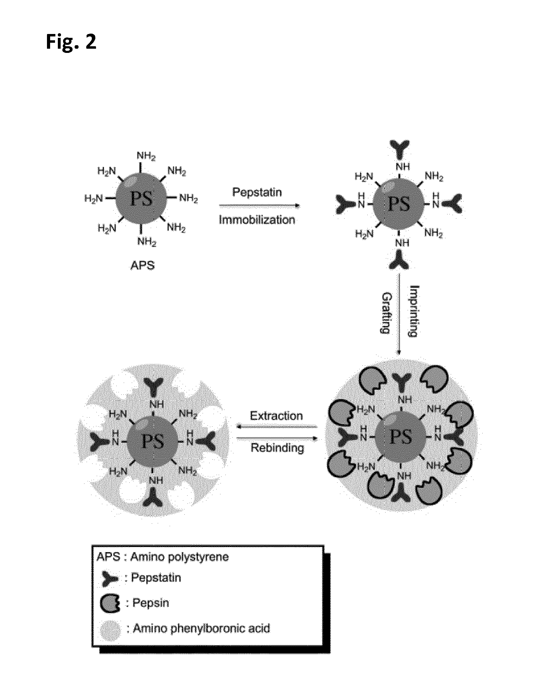

3-Aminophenylboronic acid (APBA) was used as a functional monomer. APBA is an attractive functional monomer for protein imprinting due to its water-solubility. It provides a mild aqueous medium during polymerization, and offers a variety of favourable and reversible interactions with amino acids present on the proteins. It has been demonstrated that poly-APBA was tightly grafted onto the surface of pepstatin immobilized APS (pep-APS) particles by aromatic ring electron-pairing interaction in an aqueous solution in the presence and absence of pepsin and relatively high imprinting factor confirmed that pepsin was efficiently imprinted at the surface of pep-APS particles (Fig. 2). The imprinted APS particles did not need to be ground or sieved and could easily reach the adsorption equilibrium, thus avoiding some problems of bulk polymers.

The obtained particles were characterized using X-ray photoelectron spectroscopy (XPS), and scanning electron microscopy (SEM). The results showed that pepsin-imprinted pAPBA coatings were successfully grafted onto the surface of APS microbeads.

After the extraction of the template pepsin, binding sites at or close to the surface of the particles were generated (Fig. 2). Batch rebinding studies using both pepsin-imprinted (MIP) and non-imprinted (NIP) particles were performed, and effects of the concentration of functional monomer, the adsorption time, and the initial concentration of pepsin on the binding affinities were analyzed. As a result, a high imprinting factor was obtained, which has confirmed that pepsin was effectively imprinted onto the surface of APS particles.

## Claims

1. Method for the production of molecularly imprinted particles comprising a core and a coating, the core comprising or consisting of a solid or semi-solid matrix material, and the coating comprising or consisting of a molecularly imprinted polymer (MIP), with the following steps:
a) dispersing of a plurality of cores in a dispersing medium, resulting in a dispersion of the cores,
b) addition of at least one structure-directing molecule to the dispersion of cores, each structure-directing molecule having affinity for at least one target biomacromolecule or a substructure thereof, and binding of the structure-directing molecule to the core surfaces, resulting in a dispersion of structure-directing-molecule-modified cores,
c) addition of at least one target biomacromolecule or a substructure thereof to the dispersion of structure-directing-molecule-modified cores, and formation of a complex between the at least one structure-directing molecule bound to the core surfaces and the at least one target biomacromolecule or a substructure thereof,
d) addition of at least one functional monomer, capable of being polymerized in the dispersion medium, to the dispersion of structure-directing-molecule-modified cores,
e) polymerizing the functional monomer, resulting in a coating disposed on the surface of each the cores, the coating comprising or consisting of a molecularly imprinted polymer (MIP), wherein the imprints of the MIP are filled with the target biomacromolecules or a substructure thereof, and
f) removing the at least one target biomacromolecule or a substructure thereof from the imprints of the MIP, wherein steps c) and d) can be carried out in reverse order or simultaneously.

2. Method according to claim 1, **characterized in that** the structure-directing molecule is selected from the group consisting of inhibitors for proteases, especially a protein, and the target biomacromolecules are selected from proteins, especially proteases, which can be inhibited by the inhibitors.

3. Method according to the preceding claims, **characterized in that** the structure-directing molecule is pepstatin and the target biomacromolecule is selected from aspartyl proteases, especially pepsin, cathepsin D, renin and mixtures thereof.

4. Method according to one of the preceding claims, **characterized in that** the structure-directing molecule is covalently or non-covalently bound to the core-surfaces.

5. Method according to the preceding claims, **characterized in that**, before binding the structure-directing molecule, the core-surfaces are amino-modified and the structure-directing molecule is covalently bound to the amino-groups of the core-surfaces.

6. Method according to the preceding claim, **characterized in that** the structure-directing molecule is a protein and bound via its carboxyl-terminus to the amino-groups of the core-surfaces forming an amide bond.

7. Method according to one of the preceding claims, **characterized in that** the solid matrix material of the cores is selected from the group consisting of polymers, especially polystyrene and poly(meth)acrylates, glass, silica, ceramics, hydrogels and mixtures thereof.

8. Method according to one of the preceding claims, **characterized in that** the cores are virtually spherical, elliptical or rectangular and/or have an average diameter in between 10 mm and 1 nm, preferably in between 100 µm and 50 nm.

9. Method according to one of the preceding claims, **characterized in that** the cores are hollow and/or porous.

10. Method according to one of the preceding claims, **characterized in that** the functional monomer is 3-aminophenylboronic acid.

11. Method according to one of the preceding claims, **characterized in that** the functional monomer is added as aqueous or organic solution.

12. Method according to one of the preceding claims, **characterized in that** the polymerization of the at least one functional monomer is effected by addition of at least one oxidant, especially ammonium persulfate.

13. Method according to one of the preceding claims, **characterized in that** the dispersion medium is selected from the group consisting of water, organic solvents and mixtures thereof.

14. Method according to one of the preceding claims, **characterized in that** the removal of the at least one target biomacromolecule or a substructure thereof is effected by washing, denaturation of the target biomacromolecule or a substructure thereof, especially chemical and/or thermal denaturation, and/or extraction.

15. Molecularly imprinted particle, comprising
a core, comprising or consisting of a solid or semi-solid matrix material, at least one structure-directing molecule bound to the surface of the cores, each structure-directing molecule having affinity for at least one target biomacromolecule or a substructure thereof,
a coating disposed on an outer surface and/or an inner surface the core, wherein the coating is made of a polymerisate which is molecularly imprinted, the imprints corresponding to the at least one biomacromolecule or a substructure thereof.

16. Molecularly imprinted particle according to the preceding claim, **characterized in that** the particle is virtually spherical, elliptical or rectangular and/or a plurality of the particles has an average diameter in 10 mm and 1 nm, preferably in between 100 µm and 50 nm.

17. Molecularly imprinted particle according to one of the claims 15 to 16, **characterized in that** the coating has a thickness in between 1 mm and 1 nm, preferably in between 1µm and 10 nm.

18. Molecularly imprinted particle according to one of the claims 15 to 17 produced according to a method according to one of the claims 1 to 14.

19. Method of recognizing or immobilizing at least one target biomacromolecule or a substructure thereof by contacting a plurality of molecularly imprinted particles according to one of the claims 15 to 18 with a medium containing the at least one target biomacromolecule or a substructure thereof.
